# EUROPÄISCHE PATENTSCHRIFT

(11) **EP 2 234 708 B1**
(45) Veröffentlichungstag und Bekanntmachung des Hinweises auf die Patenterteilung: **15.02.2012**
(21) Anmeldenummer: 08860251.1
(22) Anmeldetag: 09.12.2008
(51) Int. Cl.: B01J 2/04, B01J 2/30, C09B 67/06

(54) **HERSTELLUNG EINER FESTEN PIGMENTZUBEREITUNG IN FORM EINES GRANULATS MITTELS SPRÜHTROCKNUNG**
PRODUCTION OF A SOLID PIGMENT PREPARATION IN THE FORM OF GRANULES BY SPRAY DRYING
FABRICATION D'UNE PRÉPARATION DE PIGMENTS SOLIDE SOUS FORME DE GRANULAT PAR SÉCHAGE PAR PULVÉRISATION

(30) Priorität: 10.12.2007 EP 07122743
(43) Veröffentlichungstag der Anmeldung: 06.10.2010
(73) Patentinhaber: BASF SE, 67056 Ludwigshafen (DE)
(72) Erfinder: REISACHER, Hans Ulrich, 67133 Maxdorf (DE); MAUTHE, Uwe, 68239 Mannheim (DE)
(86) Internationale Anmeldenummer: PCT/EP2008/067115
(87) Internationale Veröffentlichungsnummer: WO 2009/074576

(56) Entgegenhaltungen:
- EP-A2- 1 816 171
- WO-A1-02/090446
- WO-A2-2006/084849
- DE-A1- 1 542 149
- DE-A1-102005 035 253
- FR-A1- 2 899 495

## Beschreibung

Die vorliegende Erfindung betrifft ein Verfahren zur Herstellung einer festen Pigmentzubereitung in Form eines Granulates sowie ein Granulat, erhältlich aus einem solchen Verfahren.

Feste Pigmentzubereitungen, insbesondere in Granulatform, die in flüssigen Anwendungsmedien durch Einrühren oder Schütteln verteilbar sind (so genannte Stir-in-Pigmente) gewinnen aufgrund ihrer leichteren Handhabbarkeit gegenüber flüssigen Pigmentzubereitungen zunehmend an Interesse. Für das direkte Einfärben von Lacken und Farben ist ein solches leichtes Handling sehr vorteilhaft.

Die Herstellung von Granulaten ist im Stand der Technik bekannt. Prinzipiell können diese durch Granulierung größerer Teilchen oder durch Agglomerierung kleinerer Teilchen erhalten werden.

Typischerweise werden Pigmentgranulate durch Agglomerierung aus entsprechenden Suspensionen erhalten, die einer Sprühtrocknung unterworfen werden.

Dabei wird die Suspension, welche neben der Pigmentkomponente weiterhin Füllstoffe und Additive sowie eine Lösemittelkomponente enthält, in einer Zerstäubungsvorrichtung, wie einem Sprühturm, derart zerstäubt, dass kleine Tröpfchen gebildet werden, welche in einem heißen Gasstrom - typischerweise ein Luftstrom - getrocknet werden, wobei das Granulat typischerweise mittels Abscheider, Filter oder Zyklone erhalten wird.

Das Verfahren der Sprühtrocknung ist im Stand der Technik etabliert und es ist für den Fachmann geläufig, die Sprühtrocknung derart zu optimieren, dass die Granulate in gewünschter Größe und gewünschtem Restfeuchtegehalt erhalten werden.

Trotz der im Stand der Technik bekannten Verfahren der Sprühtrocknung zum Erhalt von Pigmentgranulaten besteht ein Bedarf an weiter optimierten Verfahren.

Eine Aufgabe der vorliegenden Erfindung liegt somit darin, solche Verfahren zur Verfügung zu stellen.

Ziel solcher Verfahren ist es, Granulate zu erhalten, die sich in ihren Eigenschaften von herkömmlichen Granulaten unterscheiden.

Eine weitere Aufgabe liegt somit darin, verbesserte Granulate bereitzustellen.

Die Aufgaben werden gelöst durch ein Verfahren zur Herstellung einer festen Pigmentzubereitung in Form eines Granulates, die Schritte enthaltend
(a) Zerstäuben einer Suspension enthaltend
   (A0) 30 bis 90 Gew.-% einer Lösemittelkomponente bezogen auf das Gesamtgewicht der Suspension;
   (A1) 2 bis 60 Gew.-% einer Pigmentkomponente bezogen auf das Gesamtgewicht der Suspension;
   (A2) 0 bis 50 Gew.-% einer ersten Füllstoffkomponente bezogen auf das Gesamtgewicht der Suspension,
   (A3)10 bis 70 Gew.-% einer oberflächenaktiven Additivkomponente bezogen auf die Summe der Gewichte der Komponenten (A1) und (A2), und gegebenenfalls weitere Komponenten,
   wobei die Summe der Gewichtsanteile aller Komponenten, bezogen beziehungsweise umgerechnet auf das Gesamtgewicht, 100 Gew.-% ergibt,
   in einer Zerstäubungsvorrichtung;
(b) Inkontaktbringen der in Schritt (a) entstandenen Tröpfchen mit einem eine vorgegebene Temperatur aufweisenden Gasstromes zu deren Trocknung unter Erhalt eines Granulates mit einem vorgegebenen Restfeuchtegehalt und
(c) Trennen des Granulates von dem Gasstrom,
dadurch gekennzeichnet, dass in Schritt (b) vor Erreichen des Restfeuchtegehaltes die Tröpfchen einem Aerosol, enthaltend eine feste zweite Füllstoffkomponente, zumindest teilweise ausgesetzt werden.

Darüber hinaus werden die Aufgaben gelöst durch eine feste Pigmentzubereitung in Form eines Granulates, erhältlich nach dem erfindungsgemäßen Verfahren.

Es hat sich gezeigt, dass durch Behandlung der in der Zerstäubungsvorrichtung erhaltenen Flüssigkeitstropfen mit einem Aerosol eine feste zweite Füllstoffkomponente enthaltend ein Granulat erhalten werden kann, das einen geringeren Anteil an einer solchen zweiten füllstoffkomponente aufweisen kann, um Granulate mit ausgezeichneten Fließ- und Dosiereigenschaften für die Feststoffdosierung zu erhalten. Granulate ohne eine zweite Füllstoffkomponente neigen wegen der flüssigen bzw. niedrigschmelzenden oberflächenaktiven Additive zu starkem Verkleben und Verbacken und sind wegen der fehlenden Rieselfähigkeit nicht mehr leicht dosierbar.

Im ersten Schritt des erfindungsgemäßen Verfahrens zur Herstellung einer festen Pigmentzubereitung in Form eines Granulates wird eine Suspension in einer Zerstäubungsvorrichtung zerstäubt.

Bei der Zerstäubungsvorrichtung handelt es sich beispielsweise um einen Sprühturm. Die Zerstäubung als solche erfolgt nach im Stand der Technik bekannten Verfahren zur Sprühtrocknung.

Dabei wird die Suspension beispielsweise mit Hilfe einer Düse und/oder rotierenden Zerstäuberscheiben zerstäubt.

Die zum Einsatz gelangende Suspension enthält, bezogen auf das Gesamtgewicht der Suspension,
(A0) 30 bis 90 Gew.-% einer Lösemittelkomponente.
   Vorzugsweise beträgt der Anteil der Lösemittelkomponente in der Suspension 40 bis 70 Gew.-%.
   Die Lösemittelkomponente kann aus einem Lösemittel oder mehreren Lösemitteln bestehen, die vorzugsweise zumindest teilweise mischbar sind.
   Bevorzugte Lösemittel sind Wasser, Alkohole und Glykole, wie Ethylenglykol, Propylenglykol, Diethylenglykol, höhere Glykole oder Mischungen davon. Bevorzugt ist Wasser.
   Darüber hinaus enthält die Suspension in Schritt (a) des erfindungsgemäßen Verfahrens zur Herstellung einer festen Pigmentzubereitung in Form eines Granulates
(A1) 2 bis 60 Gew.-% einer Pigmentkomponente, bezogen auf das Gesamtgewicht der Suspension.

Vorzugsweise beträgt der Anteil der Pigmentkomponente in der Suspension 5 bis 60 Gew.-%, mehr bevorzugt 5 bis 50 Gew.-%.

Die Pigmentkomponente kann ein Pigment oder mehrere Pigmente enthalten.

Die Pigmentkomponente (A1) basiert auf mindestens einem Pigment.

Selbstverständlich können auch Mischungen mehrerer Pigmente vorliegen.

Als Pigment(e) können anorganische oder organische Pigmente enthalten sein. Selbstverständlich kann die Pigmentkomponente auch Mischungen verschiedener anorganischer oder verschiedener organischer Pigmente oder Mischungen von anorganischen und organischen Pigmenten enthalten.

Die Pigmente liegen in feinteiliger Form vor. Die Pigmente haben dementsprechend üblicherweise mittlere Teilchengrößen von 0,01 bis 5 µm.

Als anorganische Pigmente können Bunt-, Schwarz- und Weißpigmente (Farbpigmente) sowie Glanzpigmente eingesetzt werden. Typische organische Pigmente sind Bunt- und Schwarzpigmente.

Geeignete organische Pigmente sind z.B.:
- Monoazopigmente:
   C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168, 181, 183 und 191;
   C.I. Pigment Violet 32;
- Disazopigmente:
   C.I. Pigment Orange 16, 34, 44 und 72;
   C.I. Pigment Yellow 12, 13, 14, 16, 17, 81, 83, 106, 113, 126, 127, 155, 174, 176, 180 und 188;
- Disazokondensationspigmente:
   C.I. Pigment Yellow 93, 95 und 128;
   C.I. Pigment Red 144, 166, 214, 220, 221, 242 und 262;
   C.I. Pigment Brown 23 und 41;
- Anthanthronpigmente:
   C.I. Pigment Red 168;
- Anthrachinonpigmente:
   C.I. Pigment Yellow 147, 177 und 199;
   C.I. Pigment Violet 31;
- Anthrapyrimidinpigmente:
   C.I. Pigment Yellow 108;
- Chinacridonpigmente:
   C.I. Pigment Orange 48 und 49;
   C.I. Pigment Red 122, 202, 206 und 209;
   C.I. Pigment Violet 19;
- Chinophthalonpigmente:
   C.I. Pigment Yellow 138;
- Diketopyrrolopyrrolpigmente:
   C.I. Pigment Orange 71, 73 und 81;
   C.I. Pigment Red 254, 255,264, 270 und 272;
- Dioxazinpigmente:
   C.I. Pigment Violet 23 und 37;
   C.I. Pigment Blue 80;
- Flavanthronpigmente:
   C.I. Pigment Yellow 24;
- Indanthronpigmente:
   C.I. Pigment Blue 60 und 64;
- Isoindolinpigmente:
   C.I. Pigmente Orange 61 und 69;
   C.I. Pigment Red 260;
   C.I. Pigment Yellow 139 und 185;
- Isoindolinonpigmente:
   C.I. Pigment Yellow 109, 110 und 173;
- Isoviolanthronpigmente:
   C.I. Pigment Violet 31;
- Metallkomplexpigmente:
   C.I. Pigment Red 257;
   C.I. Pigment Yellow 117, 129, 150, 153 und 177;
   C.I. Pigment Green 8;
- Perinonpigmente:
   C.I. Pigment Orange 43;
   C.I. Pigment Red 194;
- Perylenpigmente:
   C.I. Pigment Black 31 und 32;
   C.I. Pigment Red 123, 149, 178, 179, 190 und 224;
   C.I. Pigment Violet 29;
- Phthalocyaninpigmente:
   C.I. Pigment Blue 15, 15:1, 15:2,15:3, 15:4, 15:6 und 16;
   C.I. Pigment Green 7 und 36;
- Pyranthronpigmente:
   C.I. Pigment Orange 51;
   C.I. Pigment Red 216;
- Pyrazolochinazolonpigmente:
   C.I. Pigment Orange 67;
   C.I. Pigment Red 251;
- Thioindigopigmente:
   C.I. Pigment Red 88 und 181;
   C.I. Pigment Violet 38;
- Triarylcarboniumpigmente:
   C.I. Pigment Blue 1, 61 und 62;
   C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Beispiele für geeignete anorganische Pigmente sind:
- Weißpigmente:
   Titandioxid (C.I. Pigment White 6), Zinkweiß, Farbenzinkoxid; Zinksulfid, Lithopone;
- Schwarzpigmente:
   Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:
   Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36; C.I. Pigment Blue 72); Ultramarinblau; Manganblau;
   Ultramarinviolett; Kobalt- und Manganviolett;
   Eisenoxidrot (C.I. Pigment Red 101); Cadmiumsulfoselenid (C.I. Pigment Red 108); Cersulfid (C.I. Pigment Red 265); Molybdat-rot (C.I. Pigment Red 104); Ultramarinrot;
   Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
   Cersulfid (C.I. Pigment Orange 75);
   Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzink-sulfid (C.I. Pigment Yellow 37 und 35); Chromgelb (C.I. Pigment Yellow 34); Bismutvanadat (C.I. Pigment Yellow 184).

Bei den Glanzpigmenten handelt es sich um einphasig oder mehrphasig aufgebaute plättchenförmige Pigmente, deren Farbenspiel durch das Zusammenspiel von Inter-ferenz-, Reflexions- und Absorptionsphänomenen geprägt ist. Als Beispiele seien Aluminiumplättchen und ein- oder mehrfach, insbesondere mit Metalloxiden beschich-tete Aluminium-, Eisenoxid- und Glimmerplättchen genannt.

Weiterhin enthält die Suspension in Schritt (a) des erfindungsgemäßen Verfahrens zur Herstellung einer festen Pigmentzubereitung in Form eines Granulates 0 bis 50 Gew.-% einer ersten Füllstoffkomponente (A2), bezogen auf das Gesamtgewicht der Suspension. Dementsprechend muss keine erste Füllstoffkomponente (A2) in der Suspension vorhanden sein. Vorzugsweise ist keine erste Füllstoffkomponente (A2) vorhanden. Sofern eine solche Komponente vorhanden ist, beträgt der Anteil der ersten Füllstoffkomponente in der Suspension vorzugsweise 0,1 bis 50 Gew.%, mehr bevorzugt 5 bis 50 Gew.-% und insbesondere 10 bis 40 Gew.-%. Ebenso bevorzugt sind 0,1 bis 40 Gew.-%. Weiterhin bevorzugt sind 0 bis 50 Gew.-%, weiter bevorzugt 0 bis 40 Gew.-%.

Die erste Füllstoffkomponente kann einen Füllstoff oder mehrere unterschiedliche Füllstoffe enthalten. Vorzugsweise handelt es sich um farblose oder weiße Füllstoffe.

Diese farblosen oder weißen Füllstoffe weisen in der Regel einen Brechungsindex ≤ 1,7 auf. Beispielsweise beträgt der Brechungsindex von Kreide 1,55, von Baryt 1,64, von Kaolin 1,56, von Talk 1,57, von Glimmer 1,58 und von Silikaten 1,55.

Die Füllstoffe sind üblicherweise im Anwendungsmedium unlöslich und stammen insbesondere aus den folgenden chemischen Klassen, wobei sowohl Produkte natürlicher Herkunft als auch Produkte synthetischer Herkunft beispielhaft aufgeführt werden:
- Oxide und Hydroxide:
   natürlich: Aluminiumoxid und Magnesiumoxid;
   synthetisch: Aluminiumhydroxid und Magnesiumhydroxid;
- Siliciumdioxid und Silikate:
   natürlich: Quarz, Christobalit, Kieselgur, Talk, Kaolin, Kieselerde, Glimmer, Wolastonit und Feldspat;
   synthetisch: pyrogene Kieselsäure, Fällungskieselsäure, Alumosilikate und calcinierte Alumosilikate;
- Carbonate:
   natürlich: Calcium- und Magnesiumcarbonate, wie Calcit, Kreide, Dolomit und Magnesit;
   synthetisch: gefälltes Calciumcarbonat;
- Sulfate:
   natürlich: Barium- und Calciumsulfate, wie Baryt und Gips;
   synthetisch: gefälltes Bariumsulfat.

Die Füllstoffe der Komponente (A2) können die unterschiedlichsten Teilchenformen aufweisen. Beispielsweise kann es sich um Kugeln, Würfel, Plättchen oder Fasern handeln. Füllstoffe auf natürlicher Basis haben üblicherweise Teilchengrößen im Bereich von etwa 1 bis 300 µm. So weisen Handelsprodukte auf Basis natürlicher Kreide z.B. einen d₅₀-Wert von in der Regel 1 bis 160 µm auf. Teilchengrößen unter 1 µm liegen in der Regel nur bei synthetisch insbesondere durch Fällverfahren hergestellten Füllstoffen vor.

Bevorzugte Füllstoffe der Komponente (A2) sind Carbonate und Sulfate, wobei natürliche und gefällte Kreide sowie Bariumsulfat besonders bevorzugt sind. Diese Produkte sind im Handel z.B. unter den Namen Omyacarb^{®} und Omyalite^{®} (Fa. Omya) und Blanc fixe (Fa. Sachtleben) erhältlich. Weitere bevorzugte Füllstoffe sind natürliche Silikate wie Kaolin, Talkum unter dem Namen Finntalc^{®} (Fa. Mondo Minerals Oy).

Darüber hinaus enthält die Suspension in Schritt (a) des erfindungsgemäßen Verfahrens zur Herstellung einer festen Pigmentzubereitung in Form eines Granulates 10 bis 70 Gew.-% einer oberflächenaktiven Additivkomponente (A3), bezogen auf bezogen auf die Summe der Gewichte der Komponenten (A1) und (A2),

Vorzugsweise beträgt der Anteil der oberflächenaktiven Additivkomponente (A3) in der Suspension 15 bis 70 Gew.-%.

Die Additivkomponente kann ein Additiv oder mehrere Additive enthalten.

Insbesondere eignen sich hier nichtionische und/oder anionische wasserlösliche oberflächenaktive Additive. Die Wahl des Additivtyps ist dabei insbesondere abhängig von der Wahl des Pigments sowie der gewünschten Farbe.

Besonders geeignete nichtionische Additive basieren auf Polyethern (Additive (A3.1)).

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylen-oxiden und Poly(phenylethylenoxiden), sind hier vor allem Blockcopolymerisate, insbesondere Polypropylenoxid- und Polyethylenoxidblöcke oder Poly(phenylethylenoxid)- und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide sowie aromatische Carbonsäure-amide und Sulfonsäureamide, hergestellt werden. Die aromatischen Startermoleküle können dabei durch C₁-C₂₀-Alkyl oder C₇-C₃₀-Aralkyl substituiert sein. Üblicherweise werden 1 bis 300 mol, bevorzugt 3 bis 150 mol, Alkylenoxid je mol Startermolekül eingesetzt, im Fall aromatischer Startermoleküle liegen die Alkylenoxidmengen vor allem bei 2 bis 100 mol, vorzugsweise bei 5 bis 50 mol und insbesondere bei 10 bis 30 mol. Die Polyadditionsprodukte können eine terminale OH-Gruppe aufweisen oder endgruppenverschlossen sein, z.B. als C₁-C₆-Alkylether vorliegen.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der O-xosynthese. Die Alkylenoxidaddukte an diese Alkohole weisen üblicherweise mittlere Molekulargewichte Mₙ von 200 bis 5 000 auf.

Als Beispiele für die oben genannten aromatischen Alkohole seien neben unsubstituiertem Phenol und α- und β-Naphthol auch die alkylsubstituierten Produkte, die insbesondere durch C₁-C₁₂-Alkyl, vorzugsweise C₄-C₁₂- bzw. C₁-C₄-Alkyl, substituiert sind, und die aralkylsubstituierten Produkte, insbesondere C₇-C₃₀-aralkylsubstituiertes Phenol, wie Hexylphenol, Heptylphenol, Octylphenol, Nonylphenol, Isononylphenol, Undecyl-phenol, Dodecylphenol, Di- und Tributylphenol und Dinonylphenol, sowie Bisphenol A und seine Umsetzungprodukte mit Styrol, vor allem in den ortho-Positionen zu beiden OH-Gruppen durch insgesamt 4 Phenyl-1-ethylreste substituiertes Bisphenol A, genannt.

Geeignete aliphatische Amine entsprechen den oben aufgeführten aliphatischen Alkoholen. Besondere Bedeutung haben auch hier die gesättigten und ungesättigten Fett-amine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von ganz besonderem Interesse.

Als mindestens bifunktionelle Amine sind zwei- bis fünfwertige Amine bevorzugt, die insbesondere der Formel H₂N-(R¹-NR²)ₙ-H (R¹: C₂-C₆-Alkylen; R²: Wasserstoff oder C₁-C₆-Alkyl; n: 1 bis 5) entsprechen. Im Einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1 000 bis 40 000, vorzugsweise 1 500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im allgemeinen mittlere Molekulargewichte Mₙ von 1 000 bis 20 000, vorzugsweise 1 000 bis 15 000, auf.

Derartige nichtionische oberflächenaktive Additive sind bekannt und im Handel z.B. unter den Namen Tetronic^{®}, Pluronic^{®} und Pluriol^{®} Lutensol (BASF), Atlas^{®},Symperonic, (Uniquema), Emulgator WN und 386 (Lanxess) sowie Rhodasurf, Soprophor^{®} (Rhodia), Genopol (Clariant), Dowfax (Dow), Berol, Duomeen, Ethomeen (Akzo), Ethylan, (Akcros) erhältlich.

Als Beispiele für die als Komponente (A3) besonders geeigneten wasserlöslichen anionischen oberflächenaktiven Mittel seien Additive auf Basis von Polymerisaten ethylenisch ungesättigter Carbonsäuren (A3.2), Additive auf Basis von Polyurethanen (A3.3), Additive auf Basis von sauren Phosphorsäure-, Phosphonsäure-, Schwefelsäure- und/oder Sulfonsäureestern der oben genannten Polyether (A3.4) und Additive auf Basis von Polykondensationsprodukten von aromatischen Sulfonsäuren und Formalde-hyd (A3.5) genannt.

Selbstverständlich können auch Mischungen mehrerer Additive (A3) verwendet werden, also sowohl Mischungen verschiedener nichtionischer Additive als auch Mischungen verschiedener anionischer Additive sowie Mischungen von nichtionischen und anionischen Additiven.

Als anionische wasserlösliche oberflächenaktive Additive auf der Basis von Polymerisaten ungesättigter Carbonsäuren (A3.2) eignen sich insbesondere Additive aus der Gruppe der Homo- und Copolymerisate von ethylenisch ungesättigten Monocarbonsäuren und/oder ethylenisch ungesättigten Dicarbonsäuren, die keine Säurefunktion enthaltende Vinylmonomere zusätzlich einpolymerisiert enthalten können, der Alkoxylierungsprodukte dieser Homo- und Copolymerisate und der Salze dieser Homo- und Copolymerisate und ihrer Alkoxylierungsprodukte.

Als Beispiele für die carboxylgruppenhaltigen Monomere und die Vinylmonomere seien genannt:
- Acrylsäure, Methacrylsäure und Crotonsäure;
- Maleinsäure, Maleinsäureanhydrid, Maleinsäuremonoester, Maleinsäuremono-amide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobu-ten, Diisobuten und Butadien; Vinylether, wie Polyethylenglykolmonovinylether;
   Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Di-isopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/-Maleinsäure-, Acrylsäure/Methacrylsäure-, Butadien/Acrylsäure-, Isobuten/Malein-säure-, Diisobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten polymeren Additive (A3.2) mittlere Molekulargewichte M_{w} von 900 bis 250 000 auf. Die für die einzelnen Polymerisate besonders geeigneten Molekulargewichtsbereiche hängen naturgemäß von deren Zusammensetzung ab. Im Folgenden werden für verschiedene Polymerisate beispielhaft Molekulargewichtsangaben gemacht: Polyacrylsäuren: M_{w} von 900 bis 250 000; Styrol/Acryl-säure-Copolymerisate: M_{w} von 1 000 bis 50 000; Acrylsäure/Methacrylsäure-Copoly-merisate: M_{w} von 1 000 bis 250 000; Acrylsäure/Maleinsäure-Copolymerisate: M_{w} von 2 000 bis 70 000.

Neben diesen Homo- und Copolymerisaten selbst sind auch ihre Alkoxylierungsprodukte als Additive (A3.2) von besonderem Interesse.

Hierbei handelt es sich vor allem um die teilweise bis (soweit dies möglich ist) vollständig mit Polyetheralkoholen veresterten Polymerisate. In der Regel beträgt der Veresterungsgrad dieser Polymerisate 30 bis 80 Mol-%.

Für die Veresterung geeignet sind insbesondere Alkohole wie Ethanol, Propanol, Isopropanol, Butanol, Fettalkohole, die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive (A3.2) gezielt eingestellt werden.

Derartige anionische oberflächenaktive Additive (A3.2) sind ebenfalls bekannt und im Handel z.B. unter den Namen Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} und Morez^{®} (Rohm & Haas), Disperbyk^{®} (Byk) sowie Tegospers^{®} (Degussa) erhältlich.

Als anionische oberflächenaktive Additive können diese Pigmentzubereitungen weiterhin Additive auf Polyurethanbasis (A3.3) enthalten.

Der Begriff Polyurethan umfasst dabei nicht nur die reinen Umsetzungsprodukte von mehrwertigen Isocyanaten (A3.3a) mit isocyanatreaktive Hydroxygruppen enthaltenden organischen Verbindungen (A3.3b), sondern auch solche Umsetzungsprodukte, die durch den Zusatz von weiteren isocyanatreaktiven Verbindungen, z.B. von primäre oder sekundäre Aminogruppen tragenden Carbonsäuren, zusätzlich funktionalisiert sind.

Diese Additive zeichnen sich gegenüber anderen oberflächenaktiven Additiven durch ihre geringe Ionenleitfähigkeit und ihren neutralen pH-Wert aus.

Als mehrwertige Isocyanate (A3.3a) für die Herstellung der Additive (A3.3) eignen sich insbesondere Diisocyanate, es können aber auch Verbindungen mit drei oder vier Isocyanatgruppen eingesetzt werden. Es können sowohl aromatische als auch aliphatische Isocyanate verwendet werden.

Als Beispiele für bevorzugte Di- und Triisocyanate seien aufgeführt: 2,4-Toluylendiisocyanat (2,4-TDI), 4,4'-Diphenylmethandiisocyanat (4,4'-MDI), para-Xylylendiisocyanat, 1,4-Diisocyanatobenzol, Tetramethylxylylendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat, Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4-Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclo-hexan-1,3-diisocyanat (H-TDI).

Selbstverständlich können auch Mischungen von Isocyanaten (A3.3a) verwendet werden. Beispielhaft seien hier genannt: Mischungen von Strukturisomeren von 2,4-Toluylendiisocyanat und Triisocyanatotoluol, z.B. Mischungen aus 80 Mol-% 2,4-Toluylendiisocyanat und 20 Mol-% 2,6-Toluylendiisocyanat; Mischungen aus cis- und trans-Cyclohexan-1,4-diisocyanat; Mischungen von 2,4- oder 2,6-Toluylendiisocyanat mit aliphatischen Diisocyanaten, wie Hexamethylendiisocyanat und Isophorondiisocyanat.

Als isocyanatreaktive organische Verbindungen (A3.3b) eignen sich bevorzugt Verbindungen mit mindestens zwei isocyanatreaktiven Hydroxygruppen pro Molekül. Geeignet als Verbindung (A3.3b) sind jedoch auch Verbindungen, die nur eine isocyanat-reaktive Hydroxygruppe pro Molekül aufweisen. Diese monofunktionalisierten Verbindungen können die mindestens zwei isocyanatreaktive Hydroxygruppen pro Molekül enthaltenden Verbindungen bei der Umsetzung mit dem Polyisocyanat (A3.3a) teilweise oder auch ganz ersetzen.

Im Folgenden werden Beispiele für besonders bevorzugte isocyanatreaktive Verbindungen (A3.3b) mit mindestens zwei isocyanatreaktiven Hydroxygruppen pro Molekül aufgeführt.

Dabei handelt es sich um Polyetherdiole, Polyesterdiole, Polyesterdiole auf Lactonbasis, Diole und Triole mit bis zu 12 C-Atomen, Dihydroxycarbonsäuren, Dihydroxysulfonsäuren, Dihydroxyphosphonsäuren, Polycarbonatdiole, Polyhydroxyolefine und Polysiloxane mit im Mittel mindestens zwei Hydroxygruppen pro Molekül.

Geeignete Polyetherdiole (A3.3b) sind beispielsweise Homo- und Copolymerisate von C₂-C₄-Alkylenoxiden, wie Ethylenoxid, Propylenoxid und Butylenoxid, Tetrahydrofuran, Styroloxid und/oder Epichlorhydrin, die in Gegenwart eines geeigneten Katalysators, z.B. Bortrifluorid, erhältlich sind. Weiterhin geeignete Polyetherdiole sind durch (Co)Polymerisation dieser Verbindungen in Gegenwart eines Starters mit mindestens zwei aciden Wasserstoffatomen, z.B. von Wasser, Ethylenglykol, Thioglykol, Mercaptoethanol, 1,3-Propandiol, 1,4-Butandiol, 1,6-Hexandiol, 1,12-Dodecandiol, Ethylendiamin, Anilin oder 1,2-Di-(4-Hydroxyphenyl)propan, zu erhalten.

Beispiele für besonders geeignete Polyetherdiole (A3.3b) sind Polyethylenglykol, Polypropylenglykol, Polybutylenglykol und Polytetrahydrofuran sowie Copolymerisate davon.

Das Molekulargewicht Mₙ der Polyetherdiole beträgt bevorzugt 250 bis 5 000, besonders bevorzugt 500 bis 2 500.

Als isocyanatreaktive Verbindung (A3.3b) geeignete Polyesterdiole (Hydroxypolyester) sind allgemein bekannt.

Bevorzugte Polyesterdiole (A3.3b) sind die Umsetzungsprodukte von Diolen mit Dicarbonsäuren oder deren reaktiven Derivaten, z.B. Anhydriden oder Dimethylestern.

Als Dicarbonsäuren eignen sich gesättigte und ungesättigte aliphatische sowie aromatische Dicarbonsäuren, die zusätzliche Substituenten, wie Halogen, tragen können. Bevorzugte aliphatische Dicarbonsäuren sind gesättigte unverzweigte α,ω-Dicarbon-säuren, die 3 bis 22, vor allem 4 bis 12 C-Atome enthalten.

Beispiele für besonders geeignete Dicarbonsäuren sind: Bernsteinsäure, Glutarsäure, Adipinsäure, Korksäure, Azelainsäure, Sebacinsäure, 1,12-Dodecandicarbonsäure, Maleinsäure, Maleinsäureanhydrid, Fumarsäure, Itaconsäure, Phthalsäure, Isophthalsäure, Phthalsäureanhydrid, Tetrahydrophthalsäureanhydrid, Hexahydrophthalsäure-anhydrid, Tetrachlorphthalsäureanhydrid, Endomethylentetrahydrophthalsäureanhy-drid, Terephthalsäure, Terephthalsäuredimethylester und Isophthalsäuredimethylester.

Als Diole eignen sich insbesondere gesättigte und ungesättigte aliphatische und cycloaliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab.

Beispiele für besonders geeignete Diole sind: Ethylenglykol, Propylenglykol, 1,3-Propandiol, 1,4-Butandiol, 2-Methylpropan-1,3-diol, 1,5-Pentandiol, Neopentylglykol, 1,6-Hexandiol, 1,8-Octandiol, 1,10-Decandiol, 1,12-Dodecandiol, cis- und trans-But-2-en-1,4-diol, 2-Butin-1,4-diol und cis- und trans-1,4-Di(hydroxymethyl)cyclohexan.

Das Molekulargewicht Mₙ der Polyesterdiole liegt bevorzugt bei 300 bis 5 000.

Als isocyanatreaktive Verbindung (A3.3b) geeignete Polyesterdiole auf Lactonbasis basieren insbesondere auf aliphatischen gesättigten unverzweigten ω-Hydroxycarbon-säuren mit 4 bis 22, bevorzugt 4 bis 8 C-Atomen. Es eignen sich auch verzweigte ω-Hydroxycarbonsäuren, bei denen ein oder mehrere -CH₂-Gruppen in der Alkylenkette durch -CH(C₁-C₄-Alkyl)- ersetzt sind.

Beispiele für bevorzugte ω-Hydroxycarbonsäuren sind γ-Hydroxybuttersäure und δ-Hydroxyvaleriansäure.

Selbstverständlich eignen sich auch die oben genannten Diole als isocyanatreaktive Verbindungen (A3.3b), wobei dieselben Bevorzugungen wie oben gelten.

Ebenfalls als isocyanatreaktive Verbindungen (A3.3b) geeignet sind Triole, die insbesondere 3 bis 12, vor allem 3 bis 8 C-Atome aufweisen. Beispiel für ein besonders geeignetes Triol ist Trimethylolpropan.

Als isocyanatreaktive Verbindungen (A3.3b) geeignete Dihydroxycarbonsäuren sind insbesondere aliphatische gesättigte Dihydroxycarbonsäuren, die vorzugsweise 4 bis 14 C-Atome enthalten, besonders geeignet. Ganz besonders geeignet sind Dihydroxycarbonsäuren der Formel 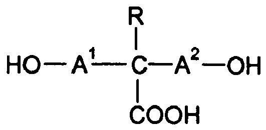 in A¹ und A² gleiche oder verschiedene C₁-C₄-Alkylenreste bedeuten und R für Wasserstoff oder C₁-C₄-Alkyl steht.

Besonders bevorzugtes Beispiel für diese Dihydroxycarbonsäuren ist Dimethylolpropionsäure (DMPA).

Weiterhin eignen sich als isocyanatreaktive Verbindungen (A3.3b) die entsprechenden Dihydroxysulfonsäuren und Dihydroxyphosphonsäuren, wie 2,3-Dihydroxypropanphosphonsäure.

Der Begriff Dihydroxycarbonsäure soll dabei auch Verbindungen umfassen, die mehr als eine Carboxylfunktion (bzw. Anhydrid- oder Esterfunktion) enthalten. Solche Verbindungen sind durch Umsetzung von Dihydroxyverbindungen mit Tetracarbonsäuredianhydriden, wie Pyromellitsäuredianhydrid oder Cyclopentantetracarbonsäuredianhydrid, im Molverhältnis 2 : 1 bis 1,05 : 1 in einer Polyadditionsreaktion erhältlich und weisen vorzugsweise ein mittleres Molekulargewicht Mₙ von 500 bis 10 000 auf.

Als Beispiele für geeignete Polycarbonatdiole (A3.3b) sind die Umsetzungsprodukte von Phosgen mit einem Überschuss an Diolen, insbesondere unverzweigten gesättigten aliphatischen α,ω-Diolen mit 2 bis 12, insbesondere 2 bis 8, vor allem 2 bis 4 C-Atomen zu nennen.

Als isocyanatreaktive Verbindung (A3.3b) geeignete Polyhydroxyolefine sind vor allem α,ω-Dihydroxyolefine, wobei α,ω-Dihydroxybutadiene bevorzugt sind.

Die weiterhin als isocyanatreaktive Verbindung (A3.3b) geeigneten Polysiloxane enthalten im Mittel mindestens zwei Hydroxygruppen pro Molekül. Besonders geeignete Polysiloxane weisen im Mittel 5 bis 200 Si-Atome (Zahlenmittel) auf und sind vor allem mit C₁-C₁₂-Alkylgruppen, insbesondere Methylgruppen, substituiert.

Als Beispiele für isocyanatreaktive Verbindungen (A3.3b), die nur eine isocyanatreaktive Hydroxygruppe aufweisen, seien insbesondere aliphatische, cycloaliphatische, araliphatische oder aromatische Monohydroxycarbonsäuren und -sulfonsäuren genannt.

Die Additive auf Polyurethanbasis (A3.3) werden durch Umsetzung der Verbindungen (A3.3a) und (A3.3b) hergestellt, wobei das Molverhältnis von (A3.3a) zu (A3.3b) in der Regel 2 : 1 bis 1 : 1, vorzugsweise 1,2 : 1 bis 1 : 1,2, beträgt.

Dabei ist es möglich, neben den vorstehend genannten isocyanatreaktiven Verbindungen (A3.3b) weitere Verbindungen mit isocyanatreaktiven Gruppen zuzusetzen, beispielsweise Dithiole, Thioalkohole, wie Thioethanol, Aminoalkohole, wie Ethanolamin und N-Methylethanolamin, oder Diamine, wie Ethylendiamin, und dadurch Polyurethane herzustellen, die neben den Urethangruppen noch Isocyanuratgruppen, Allophanat-gruppen, Harnstoffgruppen, Biuretgruppen, Uretdiongruppen oder Carbodiimidgruppen tragen. Weitere Beispiele für solche isocyanatreaktiven Verbindungen sind aliphatische, cycloaliphatische, araliphatische oder aromatische Carbonsäuren und Sulfonsäuren, die mindestens zwei primäre und/oder sekundäre Aminogruppen tragen.

Selbstverständlich können auch entsprechende nur eine isocyanatreaktive Gruppe aufweisende Verbindungen, beispielsweise Monoalkohole, primäre und sekundäre Monoamine, Monoaminocarbon- und -sulfonsäuren und Mercaptane, zugesetzt werden. Übliche Einsatzmengen liegen bei bis zu 10 Mol-%, bezogen auf (A3.3a).

Vorzugsweise liegen die Carboxylgruppen der Umsetzungsprodukte (A3.3) zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die Additive (A3.3) mittlere Molekulargewichte M_{w} von 500 bis 250 000 auf.

Durch Steuerung des Verhältnisses von polaren zu unpolaren Gruppen können die oberflächenaktiven Eigenschaften der Additive (A3.3) gezielt eingestellt werden.

Derartige anionische oberflächenaktive Additive (A3.3) sind bekannt und im Handel z.B. unter den Namen Borchi^{®} GEN SN95 (Borchers) erhältlich.

Wasserlösliche anionische oberflächenaktive Additive auf der Basis von sauren Phosphorsäure-, Phosphonsäure-, Schwefelsäure- und/oder Sulfonsäureestern von Polyethern (A3.4) basieren insbesondere auf den Umsetzungsprodukten der oben aufgeführten Polyether (A3.1) mit Phosphorsäure, Phosphorpentoxid und Phosphonsäure bzw. Schwefelsäure und Sulfonsäure. Hierbei werden die Polyether in die entsprechenden Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alk-oxylierten, vor allem ethoxylierten, Fettalkoholen, Alkylphenolen und Aminen, auch mehrwertigen Aminen, wie Hexamethylendiamin.

Derartige anionische oberflächenaktive Additive (A3.4) sind bekannt und im Handel z.B. unter den Namen Nekal^{®} (BASF), Tamol^{®} (BASF), Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF), Strodex (Dexter), erhältlich.

Wasserlösliche anionische Additive auf Basis von aromatischen Sulfonsäuren und Formaldehyd (A3.5) basieren insbesondere auf Naphthalinsulfonsäure und werden ebenfalls vorzugsweise in Salzform, insbesondere als Natriumsalz, eingesetzt. Ihr mittleres Molekulargewicht Mw liegt üblicherweise bei 4 000 bis 15 000.

Die Additive (A3.5) sind ebenfalls bekannt und z.B. im Handel unter dem Namen Tamol^{®} (BASF) erhältlich.

Darüber hinaus kann die Suspension weitere Komponenten enthalten.

Hierbei kann es sich beispielsweise um Oxidationsschutzmittel handeln.

Als Beispiele für geeignete Oxidationsschutzmittel seien die bekannten Klassen der sterisch gehinderten Phenole, der aromatischen Amine, der Thiosynergisten, der Phosphite und Phosphonite und der sterisch gehinderten Amine genannt.

Die Oxidationsschutzmittel auf Basis sterisch gehinderter Phenole enthalten als wesentlichen Baustein ein durch mindestens eine tert.-Butylgruppe in ortho-Position, insbesondere durch tert.-Butylgruppen in beiden ortho-Positionen, zur OH-Gruppe substituiertes Phenol. Die meisten bekannten Produkte enthalten mehrere dieser Bausteine, die über verschiedene Brückenglieder miteinander verbunden sind.

Bei den Oxidationsschutzmitteln auf Basis aromatischer Amine handelt es sich hauptsächlich um Diarylamine, Amin/Keton-Kondensationsprodukte, z.B. Anilin/Aceton-Kondensate und substituierte p-Phenylendiamine.

Beispiele für Thiosynergisten sind die Metallsalze von Dialkyldithiocarbaminsäuren, Zinkdialkyldithiophosphate und Ester (insbesondere Dilauryl-, Dimyristyl- und Distearyl-ester) von Thiodipropionsäure.

Bei den Oxidationsschutzmitteln auf Basis von Phosphiten und Phosphoniten handelt es sich üblicherweise um die Ester der entsprechenden Phosphorsäuren mit alkylsubstituierten, insbesondere tert.-butylsubstituierten, Phenolen.

Die Oxidationsschutzmittel auf Basis von sterisch gehinderten Aminen (HALS) enthalten als wesentlichen Baustein ein 2,6-dialkylsubstituiertes, insbesondere ein -dimethylsubstituiertes, Piperidin, das in 4-Position über die verschiedensten Brückenglieder mit weiteren Piperidinbausteinen verknüpft ist.

Oxidationsschutzmittel sind allgemein bekannt und z.B. unter den Namen Irganox^{®}, Irgaphos^{®}, Chimassorb^{®} und Irgastab^{®} (Ciba), Topanol^{®} (ICI), Hostanox^{®} (Clariant) und Goodrite^{®} (Goodyear) erhältlich.

Wenn in der Suspension in Schritt (a) des erfindungsgemäßen Verfahrens ein Oxidationsschutzmittel enthalten ist, liegt sein Gehalt in der Regel bei 0,1 bis 5 Gew.-%, insbesondere bei 0,1 bis 2 Gew.-% bezogen auf das Gesamtgewicht der Suspension.

Zusätzlich können noch geringe Menge an Entschäumern (0,01 bis 0,2 Gew.-% bezogen auf das Gesamtgewicht der Suspension beispielsweise der Firmen Tego, Byk, Borchers) und Bioziden (0,01 bsi 0,5 Gew.-% bezogen auf das Gesamtgewicht der Suspension beispielsweise der Firmen Thor, Rohm & Haas) in der Suspension enthalten sein.

Die Körnigkeit der Suspension in Schritt (a) des erfindungsgemäßen Verfahrens zur Herstellung einer festen Pigmentzubereitung in Form eines Granulates liegt vorzugsweise im Bereich von 0,01 µm bis 10 µm, mehr bevorzugt im Bereich von 0,01 bis 5 µm. Eine Bestimmung erfolgt vorzugsweise mit Hilfe eines Grindometers durch Laserbeugung (Fa. Malvern, Cilas).

Die Körnigkeit der Suspension kann generell anhand von im Stand der Technik bekannten Methoden eingestellt werden.

So wird typischerweise zunächst die Pigmentkomponente (A1) in eine Lösemittelkomponente, die die Lösemittelkomponente (A0) sein kann und vorzugsweise Wasser ist, eingebracht und zumindest ein Teil des Additivs (A3) und gegebenenfalls weitere Komponenten der Suspension zugeführt. Danach wird diese einer Nasszerkleinerung unterworfen und die erste Füllstoffkomponente vor oder nach der Nasszerkleinerung der Suspension zugesetzt und die Suspension dann, gegebenenfalls nach Zugabe der restlichen Mengen an Additivkomponente (A3), der Sprühtrocknung unterworfen.

Die Pigmentkomponente kann hierbei als trockenes Pulver oder in Form eines Presskuchens eingesetzt werden.

Bei der Pigmentkomponente handelt es sich vorzugsweise um ein gefinishtes Produkt, d.h. die Primärkorngröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so dass die anfallenden Pigmentsuspensionen direkt im erfindungsgemäßen Verfahren eingesetzt werden können.

Da die gefinishte Pigmentkomponente bei der Trocknung üblicherweise wieder reagglomeriert, wird es in wässriger Suspension einer Nasszerkleinerung, z.B. einer Mahlung in einer Rührwerkskugelmühle, unterzogen.

Bei der Nasszerkleinerung sollte zumindest ein Teil des in der fertigen Pigmentzubereitung enthaltenen Additivs anwesend sein, vorzugsweise setzt man die gesamte Menge Additiv vor der Nasszerkleinerung zu.

Um eine möglichst homogene Verteilung des eventuell ebenfalls einen Bestandteil der Pigmentzubereitungen bildenden Oxidationsschutzmittels zu erreichen, wird dieses zweckmäßigerweise auch vor der Nasszerkleinerung zugegeben.

Kommt ein Füllstoff der ersten Füllstoffkomponente zum Einsatz, so kann dieser vor oder nach der Nasszerkleinerung zugesetzt werden. Wenn dieser bereits die gewünschte Korngrößenverteilung aufweist, wird er vorzugsweise erst nach der Nasszerkleinerung der Pigmentkomponente in der Pigmentsuspension dispergiert. Dies gilt insbesondere fürfüllstoffe mit einer geringen Härte, wie Kreide, die bei der Mahlung des Pigments unerwünscht mit zerkleinert würden. Umgekehrt kann die noch erforderliche Zerkleinerung eines zu grobteiligen Füllstoffs vorteilhaft mit der Zerkleinerung des Pigments kombiniert werden.

Durch die untern näher beschriebene Trocknung in Schritt (b) fallen grobteilige Granulate mit mittleren Korngrößen > 50 µm an.

Die Sprühgranulierung wird vorzugsweise in einem Sprühturm mit Einstoffdüse durchgeführt. Die Suspension wird hier in form größerer Tropfen versprüht, wobei das Lösemittel größtenteils verdampft wobei weitgehend kugelförmigen Granulats mit besonders glatter Oberfläche (BET-Werte von in der Regel ≤ 15 m²/g, insbesondere ≤ 10 m²/g) entstehen.

Die Gaseintrittstemperatur im Sprühturm liegt im Allgemeinen bei 130 bis 300°C, bevorzugt bei 150 bis 300°C. Die Gasaustrittstemperatur beträgt in der Regel 60 bis 150°C, vorzugsweise 70 bis 130°C.

Die Restfeuchte des hierbei erhaltenen Pigmentgranulats liegt bevorzugt bei < 5 Gew.-%.

In Schritt (b) des erfindungsgemäßen Verfahrens zur Herstellung einer festen Pigmentzubereitung in Form eines Granulates werden die in Schritt (a) entstandenen Tröpfchen mit einem eine gegebene Temperatur aufweisenden Gasstrom in Kontakt gebracht, damit eine Trocknung unter Erhalt eines Granulates mit einem vorgegebenen Restfeuchtegehalt erhalten wird.

Insoweit entspricht Schritt (b) des erfindungsgemäßen Verfahrens zur Herstellung einer festen Pigmentzubereitung in Form eines Granulates also einer konventionellen Sprühtrocknung.

Erfindungsgemäß werden jedoch in Schritt (b) vor Erreichen des Restfeuchtegehaltes die Tröpfchen einem Aerosol, enthaltend eine feste zweite Füllstoffkomponente, zumindest teilweise ausgesetzt. Vorzugsweise wird das Aerosol derart eingebracht, dass die Tröpfchen vollständig ausgesetzt sind.

Dies kann beispielsweise dadurch erreicht werden, dass in der Zerstäubungsvorrichtung ein weiterer Einlass vorgesehen ist, über den das Aerosol in die Zerstäubungsvorrichtung eingeführt werden kann.

Dies erfolgt üblicherweise im oberen Bereich der Zerstäubungsvorrichtung.

Die Dosierung der 2. Füllstoffkomponente erfolgt z.B. durch eine Feststoffschnecke, wobei mit Luft ein Aerosol gebildet wird, welches mit einem bestimmten Druck, beispielsweise im Bereich von 1 bis 10 bar, vorzugsweise 2 bis 6 bar, in die Zerstäubungsvorrichtung eingebracht wird. Die Dosierung der 2. Füllstoffkomponente erfolgt in Abhängigkeit der Dosierung der Pigmentsuspension in die Zerstäubungsapparatur.
Die Dosierung der 2. Füllstoffkomponente beträgt vorzugsweise 0,01 bis 2 Gew.%, mehr bevorzugt 0,01 bis 1,0 Gew.-%, weiter mehr 0,01 bis 0,5 Gew.-% bezogen auf das erhaltene Granulat..

Die Temperatur des Gasstromes beim Inkontaktbringen in Schritt (b) liegt vorzugsweise im Bereich von 70°C bis 250°C.

Typischerweise liegen die Gaseintrittstemperaturen bei Einlass in die Zerstäubungsvorrichtung etwas höher. Vorzugsweise betragen die Temperaturen die oben angegebenen Bereiche.

Der erhaltene Restfeuchtegehalt des Granulats kann dadurch variiert werden, dass die Temperatur des Gasstromes sowie die Strömungsgeschwindigkeit an den gewünschten Restfeuchtegehalt angepasst werden.

Typischerweise beträgt der Restfeuchtegehalt des Granulats höchstens 5 Gew.-%, bezogen auf das Gesamtgewicht des Granulats.

Die feste zweite Füllstoffkomponente ist vorzugsweise ein lockeres weißes Pulver in Form von Aggregaten von Primärpartikeln < 50 nm.

Die feste zweite Füllstoffkomponente kann einen oder mehrere Feststoffe enthalten und kann insbesondere auch solche Feststoffe enthalten, welche für die erste Feststoffkomponente gewählt wurden. Vorzugsweise unterscheiden sich jedoch erste und zweite Feststoffkomponente.

Darüber hinaus kann die zweite feste Füllstoffkomponente in ihrer Zusammensetzung identisch zu der ersten festen Füllstoffkomponente sein.

Ein ähnliches Verfahren im Zusammenhang mit der Granulierung schmelzbarer Produkte (Prilling), ist in der DE 1 542 149 offenbart.

Geeignete Füllstoffe für die feste zweite Füllstoffkomponente können aus den für die erste Füllstoffkomponente aufgeführten beispielhaften Füllstoffen ausgewählt werden.

Bevorzugt enthält die feste zweite Füllstoffkomponente im Aerosol mindestens einen der Feststoffe, ausgewählt aus der Gruppe bestehend aus Kieselsäure, Aluminiumoxid, Titandioxid, Zirkondioxid und Bariumsulfat.

Besonders bevorzugt enthält die zweite feste Füllstoffkomponente Kieselsäure.

Bei der Kieselsäure kann es sich um hydrophobierte oder hydrophile gefällte oder pyrogene Kieselsäuren handeln.

Im Rahmen der vorliegenden Erfindung wird unter dem Begriff "Kieselsäure" auch Siliziumdioxid als Kieselsäure bezeichnet.

Gefällte Kieselsäuren erhält man typischerweise durch Reaktion von Wasserglas mit Schwefelsäure.

Pyrogene Kieselsäuren werden typischerweise durch Reaktion von Siliziumtetrachlorid mit Wasser unter Abscheidung von Chlorwasserstoffgasen erhalten.

Hersteller von Kieselsäuren sind beispielsweise Degussa AG (Sipernat^{®}, Ultrasil^{l®} und Sident^{®}, Aerosil^{®}, Aerodisp^{®}, Aeroxide^{®}, Aeroperl^{®}), Wacker Chemie AG (HDK^{®}), Dupont (LoVel, HiSil).

Vorzugsweise weist das erhaltene Granulat eine mittlere Teilchengröße im Bereich von 10 µm bis 5000 µm auf. Weiter bevorzugt beträgt die mittlere Teilchengröße 20 µm bis 1000 µm.

In Schritt (c) des erfindungsgemäßen Verfahrens erfolgt die Trennung des Granulates von dem Gasstrom. Das im Gasstrom mitgeführte Aerosol wird dabei ebenfalls vom Granulat getrennt. Dies kann beispielsweise mit Abscheider-Zyklonen erfolgen.

Das durch das erfindungsgemäße Verfahren erhaltene Granulat weist eine Pigmentzusammensetzung auf, die
(A1) 5 bis 90 Gew.-% bezogen auf das Gesamtgewicht der Zusammensetzung der Pigmentkomponente;
(A2) 0 bis 70 Gew.-% bezogen auf das Gesamtgewicht der Zusammensetzung der ersten Füllstoffkomponente;
(A3) 10 bis 70 Gew.-% der oberflächenaktiven Additivkomponente bezogen auf die Summe der Gewichte der Komponenten (A1) und (A2),
(A4) 0,01 bix 2 Gew.-% bezogen auf das Gesamtgewicht der Zusammensetzung der festen zweiten Füllstoffkomponenten und gegebenenfalls weitere Komponenten enthält,
wobei die Summe der Gewichtsanteile aller Komponenten, bezogen beziehungsweise umgerechnet auf das Gesamtgewicht, 100 Gew.-% ergibt.

Vorzugsweise handelt es sich bei den Komponenten um die oben genannten erforderlichen und gegebenenfalls vorhandenen Komponenten, nämlich (A1) bis (A4), (A0), Oxidationsmittel, Entschäumer und Biozide.

Vorzugsweise enthält die Zusammensetzung der Komponenten (A1) bis (A4) folgende Anteile in der Zusammensetzung.
(A1) 10 bis 85 Gew.-% der Pigmentkomponente;
(A2) 0 bis 70 Gew.-% der ersten füllstoffkomponente;
(A3) 15 bis 70 Gew.-% der oberflächenaktiven Additivkomponente und
(A4) 0,01 bis 1 Gew.-% der festen zweiten Füllstoffkomponenten.

Da zumindest ein Teil der Füllstoffkomponente nicht wie herkömmlich bereits in der Suspension sondern in Form eines Aerosols gemäß dem erfindungsgemäßen Herstellverfahren dem Granulat zugeführt wird, ergibt sich ein vom Stand der Technik unterschiedliches Granulat, das bevorzugte Eigenschaften aufweist.

Ein weiterer Gegenstand der vorliegenden Erfindung ist daher eine feste Pigmentzubereitung in Form eines Granulats, erhältlich nach dem erfindungsgemäßen Verfahren.

Solche festen Pigmentzubereitungen in Form eines Granulates können beispielsweise in Feststoffdosierapparate der Fa. Fast & Fluid Management oder in Apparate zur Feststoffdosierung gemäß EP 1388365 für die Einfärbung von Lacken, Farben, Anstrichmitteln, Tinten, Beschichtungssystemen wie Zement, Beton, Putze, Fugenmaterialien, Dichtungsmassen, Druckfarben, polymeren Materialen, auch in Verbindung mit Farbmischsystemen eingebracht werden.

### Beispiele

### Beispiele 1 bis 3:

Die Herstellung der Pigmentgranulate erfolgt, indem eine Suspension von x % gefinishtem Pigment (A1), y % Füllstoffkomponente (A2), z % Additiv (A3) in a % Wasser durch Zugabe von 25 gew.-%iger Natronlauge auf einen pH-Wert von 7 eingestellt, in einer Kugelmühle auf einen d₅₀-Wert von < 1 µm gemahlen und dann in einem Sprühturm mit Einstoffdüse (Gaseintrittstemperatur 165°C, Gasaustrittstemperatur 70°C) mit einer Restfeuchte von < 5% sprühgranuliert wird. Über eine Feststoffschnecke wird 0,02 % der zweiten Füllstoffkomponente (A4) bezüglich (A1+A2) mittels eines Luftstroms zudosiert.

### Beispiele 1-3

| A0 | % | A1 | % | A2 | % | A3 | % |
|---|---|---|---|---|---|---|---|
| Wasser | 50 | P.Y. 74 | 40 | Talkum | 0 | * | 10 |
| Wasser | 50 | P.V. 23 | 5 | Talkum | 35 | * | 10 |
| Wasser | 50 | P.O. 67 | 40 | Talkum | 0 | * | 10 |

| | | | | | | | |
|---|---|---|---|---|---|---|---|
| *Propylenoxid/Ethylenoxid/Blockpolymer mit zentralem Polypropylenblock, einem Ethylenoxidgehalt von 50% und einem mittleren Molekulargewicht M von 6500. | | | | | | | |

### Vergleichsbeispiel 1:

Wie Beispiel 1 ohne (A4).

### Vergleichsbeispiel 2:

0,02 Gew.% Aerosil 200 bezügl. (A1+A2+A3) werden zur Mahlsuspension gegeben, die sprühgranuliert wird.

### Vergleichsbeispiel 3:

1,0 Gew.% Aerosil 200 bezüglich (A1+A2+A3) werden zur Mahlsuspension gegeben, die sprühgranuliert wird.

Die Bestimmung der Farbstärke der Pigmentgranulate erfolgt farbmetrisch in der Weißaufhellung (Angabe der Färbeäquivalente FAE, DIN 55986) in einer wasserbasierenden Dispersionsfarbe. Dazu wird eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wird dann mit einer 100 µm-Spiralrakel auf schwarz/weißen Prüfkarton aufgezogen und 30 min getrocknet.

Die Koloristik der Vergleichsbeispiele 1-3 und von Beispiel 1 ist identisch. Die geringen Mengen an 2. Füllstoffkomponente haben keinen Einfluss auf die Koloristik.

Bestimmung der Rieselfähigkeit bzw. des Fließverhaltens:

Für die Verwendung von rieselfähigen Granulaten in Dosierapparaturen ist das Fließverhalten wichtig. Gemessen wird die Rieselfähigkeit über die Rieselfähigkeit in Prüftrichtern, jedoch sind damit keine Rieselstörungen infolge von Brücken- oder Schachtbildung zu erkennen.

Granulat gemäß Beispiel 1 zeigt im Vergleich zu Vergleichsbeispiel 1-3 eine etwas kürzere Auslaufzeit (32 vs. 37 sec. aus einem Prüftrichter mit 50 ml Volumen und einer Öffnung von 2 mm. Lässt man jedoch die zu prüfenden Materialen 24 h bei Raumtemperatur stehen, erkennt man bei Vergleichsbeispiel 1-3 an der Oberfläche eine harte, nicht mehr frei fließende Schicht. In Beispiel 1-3 tritt dieser Effekt nicht mehr auf.

## Patentansprüche

1. Verfahren zur Herstellung einer festen Pigmentzubereitung in Form eines Granulates, die Schritte enthaltend
(a) Zerstäuben einer Suspension enthaltend
(A0) 30 bis 90 Gew.-% einer Lösemittelkomponente bezogen auf das Gesamtgewicht der Suspension;
(A1) 2 bis 60 Gew.-% einer Pigmentkomponente bezogen auf das Gesamtgewicht der Suspension;
(A2) 0 bis 50 Gew.-% einer ersten Füllstoffkomponente bezogen auf das Gesamtgewicht der Suspension,
(A3) 10 bis 70 Gew.-% einer oberflächenaktiven Additivkomponente bezogen auf die Summe der Gewichte der Komponenten (A1) und (A2), und gegebenenfalls weitere Komponenten,
wobei die Summe der Gewichtsanteile aller Komponenten, bezogen beziehungsweise umgerechnet auf das Gesamtgewicht, 100 Gew.-% ergibt,
in einer Zerstäubungsvorrichtung;
(b) Inkontaktbringen der in Schritt (a) entstandenen Tröpfchen mit einem eine vorgegebene Temperatur aufweisenden Gasstromes zu deren Trocknung unter Erhalt eines Granulates mit einem vorgegebenen Restfeuchtegehalt und
(c) Trennen des Granulates von dem Gasstrom,
**dadurch gekennzeichnet, dass** in Schritt (b) vor Erreichen des Restfeuchtegehaltes die Tröpfchen einem Aerosol, enthaltend eine feste zweite Füllstoffkomponente, zumindest teilweise ausgesetzt werden.

2. Verfahren nach Anspruch 1, **dadurch gekennzeichnet, dass** die Körnigkeit der Suspension in Schritt (a) einen Wert im Bereich von 0,01 µm bis 10 µm aufweist.

3. Verfahren nach Anspruch 1 oder 2, **dadurch gekennzeichnet, dass** die Temperatur des Gasstromes beim in Kontakt bringen in Schritt (b) im Bereich von 70°C bis 250°C liegt.

4. Verfahren nach einem der Ansprüche 1 bis 3, **dadurch gekennzeichnet, dass** der Restfeuchtegehalt des Granulates höchstens 5 Gew.-% bezogen auf das Gesamtgewicht des Granulates ist.

5. Verfahren nach einem der Ansprüche 1 bis 4, **dadurch gekennzeichnet, dass** die feste zweite Füllstoffkomponente im Aerosol mindestens einen der Feststoffe ausgewählt aus der Gruppe bestehend aus Kieselsäure, Aluminiumoxid, Titandioxid, Zirkondioxid und Bariumsulfat.

6. Verfahren nach Anspruch 5, **dadurch gekennzeichnet, dass** die feste zweite Füllstoffkomponente Kieselsäure enthält.

7. Verfahren nach einem der Ansprüche 1 bis 6, **dadurch gekennzeichnet, dass** das erhaltene Granulat eine mittlere Teilchengröße im Bereich von 10 µm bis 5000 µm aufweist.

8. Verfahren nach einem der Ansprüche 1 bis 7, **dadurch gekennzeichnet, dass** das erhaltene Granulat eine Pigmentzusammensetzung aufweist, die
(A1) 5 bis 90 Gew.-% bezogen auf das Gesamtgewicht der Zusammensetzung der Pigmentkomponente;
(A2) 0 bis 70 Gew.-% bezogen auf das Gesamtgewicht der Zusammensetzung der ersten Füllstoffkomponente;
(A3) 10 bis 70 Gew.-% der oberflächenaktiven Additivkomponente bezogen auf die Summe der Gewichte der Komponenten (A1) und (A2), (A4) 0,01 bis 2 Gew.-% bezogen auf das Gesamtgewicht der Zusammensetzung der festen zweiten Füllstoffkomponenten, und gegebenenfalls weitere Komponenten enthält,
wobei die Summe der Gewichtsanteile aller Komponenten, bezogen beziehungsweise umgerechnet auf das Gesamtgewicht, 100 Gew.-% ergibt.

9. Feste Pigmentzubereitung in Form eines Granulates, erhältlich nach dem Verfahren nach einem der Ansprüche 1 bis 8.

## Claims

1. A process for producing a solid pigment preparation in the form of granules which comprises the steps of
(a) atomizing a suspension comprising
(A0) 30% to 90% by weight of a solvent component based on the overall weight of the suspension;
(A1) 2% to 60% by weight of a pigment component based on the overall weight of the suspension;
(A2) 0% to 50% by weight of a first filler component based on the overall weight of the suspension,
(A3) 10% to 70% by weight of a surface-active additive component based on the sum total of the weights of said components (A1) and (A2), and optionally further components,
the sum total of the weight fractions of all components, based on the overall weight, being 100% by weight,
in an atomizing apparatus;
(b)contacting the droplets formed in step (a) with a gas stream having a predetermined temperature to dry the droplets to obtain granules having a predetermined residual moisture content, and
(c) separating the granules from the gas stream,
wherein, in step (b), before reaching the residual moisture content, the droplets are at least partly exposed to an aerosol comprising a solid second filler component.

2. The process according to claim 1 wherein the granularity of the suspension in step (a) has a value in the range from 0.01 µm to 10 µm.

3. The process according to claim 1 or 2 wherein the temperature of the gas stream during the contacting in step (b) is in the range from 70°C to 250°C.

4. The process according to any one of claims 1 to 3 wherein the residual moisture content of the granules is not more than 5% by weight based on the overall weight of the granules.

5. The process according to any one of claims 1 to 4 wherein the solid second filler component in the aerosol comprises at least one of the solids selected from the group consisting of silica, alumina, titania, zirconia and barium sulfate.

6. The process according to claim 5 wherein the solid second filler component comprises silica.

7. The process according to any one of claims 1 to 6 wherein the granules obtained have a median particle size in the range from 10 µm to 5000 µm.

8. The process according to any one of claims 1 to 7 wherein the granules obtained comprise a pigment composition comprising
(A1) 5% to 90% by weight based on the overall weight of the composition of the pigment component;
(A2) 0% to 70% by weight based on the overall weight of the composition of the first filler component;
(A3) 10% to 70% by weight of the surface-active additive component based on the sum total of the weights of said components (A1) and (A2), (A4) 0.01% to 2% by weight based on the overall weight of the composition of the solid second filler components, and
optionally further components,
the sum total of the weight fractions of all components, based on the overall weight, being 100% by weight.

9. A solid pigment preparation in the form of granules which is obtainable by following the process according to any one of claims 1 to 8.

## Revendications

1. Procédé de fabrication d'une préparation pigmentaire solide sous la forme d'un granulat, comprenant les étapes suivantes :
(a) l'atomisation d'une suspension contenant
(A0) 30 à 90 % en poids d'un composant solvant par rapport au poids total de la suspension ;
(A1) 2 à 60 % en poids d'un composant pigment par rapport au poids total de la suspension ;
(A2) 0 à 50 % en poids d'un premier composant charge par rapport au poids total de la suspension ;
(A3) 10 à 70 % en poids d'un composant additif tensioactif par rapport à la somme des poids des composants (A1) et (A2), et éventuellement des composants supplémentaires,
la somme des parties en poids de tous les composants, par rapport ou rapporté au poids total, étant de 100 % en poids,
dans un dispositif d'atomisation ;
(b) la mise en contact des gouttelettes formées à l'étape (a) avec un courant gazeux présentant une température prédéterminée pour leur séchage pour obtenir un granulat ayant une teneur en humidité résiduelle prédéterminée, et
(c) la séparation du granulat du courant gazeux, **caractérisé en ce qu'**à l'étape (b), avant que la teneur en humidité résiduelle soit atteinte, les gouttelettes sont exposées au moins en partie à un aérosol qui contient un second composant charge solide.

2. Procédé selon la revendication 1, **caractérisé en ce que** la taille de particule de la suspension à l'étape (a) présente une valeur dans la plage allant de 0,01 µm à 10 µm.

3. Procédé selon la revendication 1 ou 2, **caractérisé en ce que** la température du courant gazeux lors de la mise en contact à l'étape (b) se situe dans la plage allant de 70 °C à 250 °C.

4. Procédé selon l'une quelconque des revendications 1 à 3, **caractérisé en ce que** la teneur en humidité résiduelle du granulat est d'au plus 5 % en poids par rapport au poids total du granulat.

5. Procédé selon l'une quelconque des revendications 1 à 4, **caractérisé en ce que** le second composant charge solide dans l'aérosol contient au moins un des solides choisis dans le groupe constitué par la silice, l'oxyde d'aluminium, le dioxyde de titane, le dioxyde de zirconium et le sulfate de baryum.

6. Procédé selon la revendication 5, **caractérisé en ce que** le second composant charge solide contient de la silice.

7. Procédé selon l'une quelconque des revendications 1 à 6, **caractérisé en ce que** le granulat obtenu présente une taille de particule moyenne dans la plage allant de 10 µm à 5 000 µm.

8. Procédé selon l'une quelconque des revendications 1 à 7, **caractérisé en ce que** le granulat obtenu comprend une composition pigmentaire, qui contient
(A1) 5 à 90 % en poids, par rapport au poids total de la composition, du composant pigment ;
(A2) 0 à 70 % en poids, par rapport au poids total de la composition, du premier composant charge ;
(A3) 10 à 70 % en poids du composant additif tensioactif par rapport à la somme des poids des composants (A1) et (A2),
(A4) 0,01 à 2 % en poids, par rapport au poids total de la composition, du second composant charge solide, et éventuellement des composants supplémentaires,
la somme des parties en poids de tous les composants, par rapport ou rapporté au poids total, étant de 100 % en poids.

9. Préparation pigmentaire solide sous la forme d'un granulat, pouvant être obtenue par le procédé selon l'une quelconque des revendications 1 à 8.
